(19) Europäisches Patentamt
European Patent Office
Office européen des brevets

(11) EP 4 632 991 A1

(12) EUROPEAN PATENT APPLICATION
published in accordance with Art. 153(4) EPC

(43) Date of publication:
15.10.2025 Bulletin 2025/42

(21) Application number: 23909994.8

(22) Date of filing: 05.12.2023

(51) International Patent Classification (IPC):
H02J 7/00 (2006.01)

(52) Cooperative Patent Classification (CPC):
H02J 7/00; Y02E 60/10

(86) International application number:
PCT/CN2023/136481

(87) International publication number:
WO 2024/140064 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 CN 202211701257

(71) Applicant: ZTE Corporation
Shenzhen, Guangdong 518057 (CN)

(72) Inventors:
• KOU, Weiping
Shenzhen, Guangdong 518057 (CN)
• XIAO, Jianhua
Shenzhen, Guangdong 518057 (CN)
• GONG, Yong
Shenzhen, Guangdong 518057 (CN)

(74) Representative: Savi, Massimiliano et al
Notarbartolo & Gervasi S.p.A.
Viale Achille Papa, 30
20149 Milano (IT)

(54) **CHARGING CONTROL METHOD, ELECTRONIC DEVICE AND READABLE STORAGE MEDIUM**

(57) The present application relates to a charging control method, an electronic device and a readable storage medium. The method comprises the steps of: acquiring a battery temperature and a housing temperature, and calculating the temperature difference between the battery temperature and the housing temperature (S10); matching an actual charging scenario corresponding to the temperature difference, and determining a charging control parameter corresponding to the actual charging scenario (S20); and adjusting an actual charging current on the basis of the charging control parameter (S30).

```
┌─────────────────────────────────────────────────────────┐
│ Acquire a battery temperature and a housing temperature,  │ ── S10
│ and calculate a temperature difference between the        │
│ battery temperature and the housing temperature           │
└─────────────────────────────────────────────────────────┘
                          │
                          ▼
┌─────────────────────────────────────────────────────────┐
│ Identify an actual charging scenario corresponding to the │ ── S20
│ temperature difference, and determine a charging control  │
│ parameter corresponding to the actual charging scenario   │
└─────────────────────────────────────────────────────────┘
                          │
                          ▼
┌─────────────────────────────────────────────────────────┐
│ Adjust an actual charging current based on the charging   │ ── S30
│ control parameter                                         │
└─────────────────────────────────────────────────────────┘
```

FIG. 1

**Description**

**CROSS-REFERENCE TO RELATED APPLICATION**

This application is filed on the basis of Chinese patent application No. 202211701257.0 filed December 28, 2022, and claims priority to the Chinese patent application, the entire contents of which are incorporated herein by reference.

**TECHNICAL FIELD**

The present disclosure relates to the field of battery charging, and in particular, to a charging control method, an electronic device, and a readable storage medium.

**BACKGROUND**

To meet market demand, fast charging technologies and products of various terminal devices are constantly updated to achieve high-power fast charging. At present, the fast charging power of mobile phones has reached 100 W or more. The increase in charging current leads to an increase in the heat generation of batteries and chips during charging. The temperature rise of a mobile phone during fast charging is much faster than that during ordinary charging. The high temperature caused by charging will affect user experience, reduce the service life of terminal device components, and accelerate the aging of electronic components. In some cases, this problem is solved by reducing the charging current when the temperature is high and increasing the charging current when the temperature is low. However, such a method greatly reduces the charging current when the terminal device is heavily used, resulting in low charging efficiency.

**SUMMARY**

The present disclosure provides a charging control method, including: acquiring a battery temperature and a housing temperature, and calculating a temperature difference between the battery temperature and the housing temperature; identifying an actual charging scenario corresponding to the temperature difference, and determining a charging control parameter corresponding to the actual charging scenario; and adjusting an actual charging current based on the charging control parameter.

The present disclosure further provides an electronic device, including a memory, a processor, and a computer program stored in the memory and executable by the processor, where the computer program, when executed by a processor, causes the processor to implement the charging control method described above.

The present disclosure further provides a computer-readable storage medium, having a computer program stored thereon, where the computer program, when executed by a processor, causes the processor to implement the charging control method described above.

**BRIEF DESCRIPTION OF DRAWINGS**

Accompanying drawings herein are incorporated into the specification and constitute a part of this specification, show embodiments that conform to the present disclosure, and are used for describing a principle of the present disclosure together with this specification.

To describe the technical schemes of the embodiments of the present disclosure more clearly, the following briefly introduces the accompanying drawings required for describing the embodiments of the present disclosure. Apparently, those having ordinary skills in the art may still derive other drawings from these accompanying drawings without creative efforts.

FIG. 1 is a schematic flowchart of a charging control method according to a first embodiment of the present disclosure;

FIG. 2 is an overall schematic flowchart of a charging control method according to the present disclosure;

FIG. 3 is a flowchart of detecting a balance charging current in a charging control method according to a second embodiment of the present disclosure; and

FIG. 4 is a schematic block diagram of an electronic device according to the present disclosure.

## DETAILED DESCRIPTION

It is to be understood that the specific embodiments described herein are merely used for illustrating the present disclosure, and are not intended to limit the present disclosure. In order for those having ordinary skills in the art to better understand the present disclosure, the technical schemes in the embodiments of the present disclosure will be described clearly and fully in conjunction with the accompanying drawings in the embodiments of the present disclosure. Apparently, the embodiments described are merely some embodiments, rather than all of the embodiments of the present disclosure. All other embodiments obtained by those having ordinary skills in the art without creative efforts based on the embodiments of the present disclosure shall fall within the protection scope of the present disclosure.

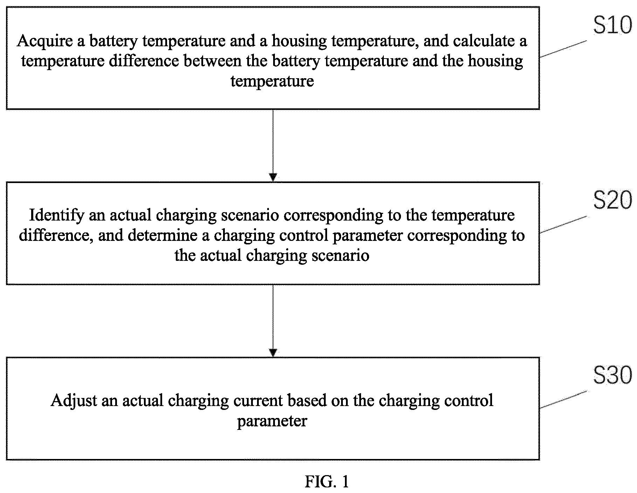

The present disclosure provides a charging control method, which is applied to a charging control apparatus. The charging control apparatus may be a smart terminal device such as a mobile phone or a tablet. FIG. 1 is a schematic flowchart of a charging control method according to a first embodiment of the present disclosure. The method includes the following steps S10 to S30.

In a step of S10, a battery temperature and a housing temperature are acquired, and a temperature difference between the battery temperature and the housing temperature is calculated.

The battery temperature refers to the temperature of a battery. The housing temperature refers to the surface temperature of a housing in a charging control apparatus. In some embodiments, a method of detecting the battery temperature and the housing temperature may be set based on actual application scenarios. For example, temperature sensors are respectively disposed at corresponding positions on the battery and the housing.

The temperature difference is used for reflecting the difference between the battery temperature and the housing temperature.

In a step of S20, an actual charging scenario corresponding to the temperature difference is identified, and a charging control parameter corresponding to the actual charging scenario is determined.

The charging scenario is used for reflecting the operation intensity of the charging control apparatus.

It can be understood that in the charging control apparatus, in addition to the battery, there are other components that generate heat during operation, such as a processor, a camera, etc. A higher operation intensity of a component indicates the generation of more heat. Therefore, the temperature difference can reflect the operation intensity of other components that generate heat other than the battery, and the actual charging scenario can be determined based on the operation intensity of the other components that generate heat.

The charging control parameter is used for controlling charging parameters of the battery.

In a step of S30, an actual charging current is adjusted based on the charging control parameter.

A charging current is used for controlling the charging efficiency of the battery. Generally, a larger charging current indicates higher charging efficiency and the generation of more heat by the battery. A smaller charging current indicates lower charging efficiency and the generation of less heat by the battery. Therefore, through the control of the actual charging current based on the charging control parameter corresponding to the actual charging scenario, the charging efficiency and heat generation of the battery can be controlled, thereby ensuring that the heat generation of the battery is within an allowable range while meeting the charging efficiency in different charging scenarios.

It can be understood that this embodiment is applied to a charging process of the charging control apparatus, and when the completion of charging is detected, i.e., when SOC=100, the charging is stopped.

The housing temperature is affected by the battery temperature, chip temperature, and camera temperature. Therefore, through the acquisition of the difference between the battery temperature and the housing temperature, the heat generation efficiency of a chip, camera, and other components can be determined, which reflects the usage status of the chip, camera, and other components. Therefore, the actual charging scenario of the terminal device can be accurately determined according to the temperature difference, such that the charging current can be adaptively adjusted based on the actual scenario to ensure charging efficiency.

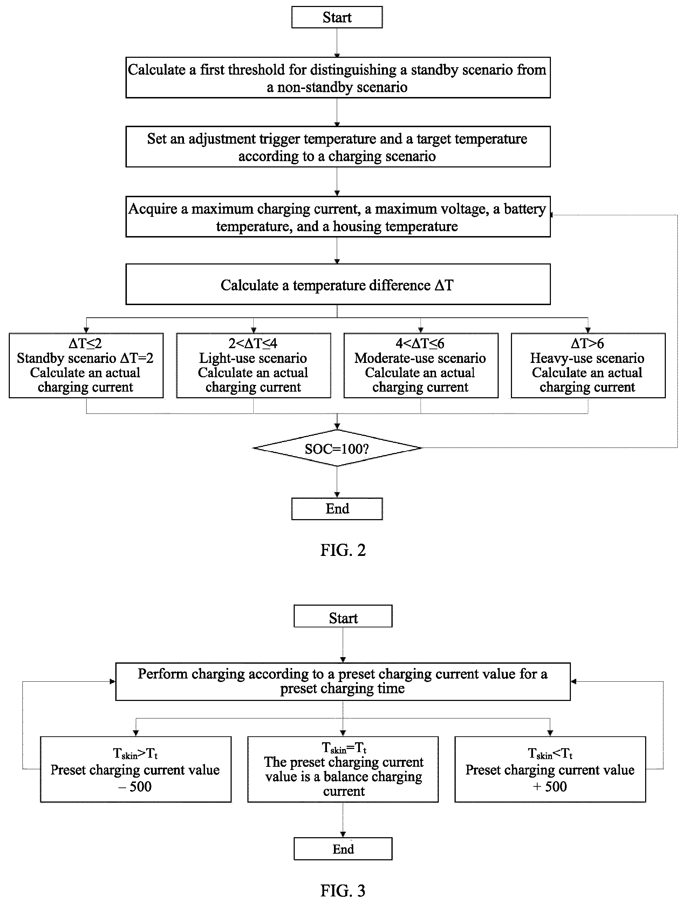

In some embodiments, referring to FIG. 2, in the charging control method according to the first embodiment of the present disclosure, S20 includes the following steps.

In a step of S21, a plurality of preset scenarios is acquired.

In a step of S22, a target scenario corresponding to the temperature difference is determined among the plurality of preset scenarios.

In a step of S23, the target scenario is determined as the actual charging scenario.

The preset scenarios are respectively used for indicating different operation intensities of the charging control apparatus. The source of the housing temperature varies with different operation intensities, resulting in various temperature differences. In some embodiments, the plurality of preset scenarios includes a standby scenario, a light-use scenario, a moderate-use scenario, and a heavy-use scenario, and S22 includes the following steps.

In a step of S221, a difference range corresponding to each of the plurality of preset scenarios is acquired, where a difference range corresponding to the standby scenario is less than or equal to a first threshold, a difference range corresponding to the light-use scenario is greater than the first threshold and less than or equal to a second threshold, a difference range corresponding to the moderate-use scenario is greater than the second threshold and less than or equal to a third threshold, and a difference range corresponding to the heavy-use scenario is greater than the third threshold.

In a step of S222, the preset scenario corresponding to the difference range to which the temperature difference belongs is determined as the target scenario.

It can be understood that in the standby scenario, the housing temperature is mainly from heat generated by the battery, in which case the housing temperature is approximately equal to the battery temperature, and the temperature difference is small; in a non-standby scenario, the housing temperature is partly from heat generated by the battery and partly from heat generated by other components, in which case the difference between the housing temperature and the battery temperature is large, i.e., the temperature difference is large. Based on this, a first threshold is set. When the temperature difference is less than or equal to the first threshold, the actual charging scenario is determined to be the standby scenario. When the temperature difference is greater than the first threshold, the actual charging scenario is determined to be a non-standby scenario. The specific value of the first threshold may be set based on actual application scenarios. For example, in this embodiment, the first threshold is 2, i.e., when the temperature difference is less than or equal to 2, the actual charging scenario is determined to be the standby scenario, and when the temperature difference is greater than 2, the actual charging scenario is determined to be a non-standby scenario.

It can be understood that when the actual charging scenario is a non-standby scenario, the heat generation varies greatly with different operation intensity. Therefore, in this embodiment, a specific charging scenario is further identified based on the operation intensity. In some embodiments, a second threshold and a third threshold are set to classify non-standby scenarios into a light-use scenario, a moderate-use scenario, and a heavy-use scenario. The specific values of the second threshold and the third threshold may be set based on actual application scenarios. For example, in this embodiment, the second threshold is 4 and the third threshold is 6, i.e., the actual charging scenario is the light-use scenario when the temperature difference falls within the range of (2, 4], the actual charging scenario is the moderate-use scenario when the temperature difference falls within the range of (4, 6], and the actual charging scenario is the heavy-use scenario when the temperature difference is greater than 6. It is to be noted that in some other embodiments, different numbers of non-standby scenarios may be set based on actual requirements.

In some embodiments, the charging control parameter includes an adjustment trigger temperature and a balance charging current, and the plurality of preset scenarios includes a standby scenario, a light-use scenario, a moderate-use scenario, and a heavy-use scenario;

the adjustment trigger temperatures corresponding to the standby scenario, the light-use scenario, the moderate-use scenario, and the heavy-use scenario are in ascending order; and

the balance charging currents corresponding to the standby scenario, the light-use scenario, the moderate-use scenario, and the heavy-use scenario are in descending order.

The adjustment trigger temperature refers to a temperature that triggers the adjustment of the actual charging current, i.e., only when the housing temperature is greater than the adjustment trigger temperature, the temperature difference is calculated, and then the subsequent adjustment of the actual charging current is triggered. It can be understood that a higher operation intensity of the standby scenario indicates a higher housing temperature. Therefore, to avoid affecting the normal operation of the charging control apparatus, the adjustment trigger temperature is set, and a standby scenario with higher operation intensity corresponds to a higher adjustment trigger temperature, thereby ensuring the normal operation at normal temperature in the charging scenarios and the adjustment of the actual charging current at high temperatures. In some embodiments, the adjustment trigger temperature may be set based on actual application scenarios and requirements. In this embodiment, the adjustment trigger temperature corresponding to the standby scenario is 32°C, the adjustment trigger temperature corresponding to the light-use scenario is 36°C, the adjustment trigger temperature corresponding to the moderate-use scenario is 37°C, and the adjustment trigger temperature corresponding to the heavy-use scenario is 38°C.

The balance charging current refers to a corresponding charging current when the heat generation and heat dissipation of the charging control apparatus are balanced at a target temperature. It can be understood that a higher operation intensity of the charging control apparatus indicates the generation of more heat. Therefore, to ensure a balance between heat generation and heat dissipation, the heat generation of the battery needs to be reduced. In this case, the corresponding balance charging current should be lower. The specific value of the balance charging current may be detected based on actual application scenarios and requirements, and set based on the detection result. In this embodiment, the balance charging current corresponding to the standby scenario is 6000 mA, the balance charging current corresponding to the light-use scenario is 3000 mA, the balance charging current corresponding to the moderate-use scenario is 2000 mA, and the balance charging current corresponding to the heavy-use scenario is 1000 mA. In some embodiments, referring to FIG. 3, a specific method of detecting the balance charging current may include the following steps.

In a step of S40, for each of the plurality of charging scenarios, a charging operation is performed according to a preset charging current value.

In a step of S50, a real-time housing temperature is acquired after the charging operation is completed.

In a step of S60, if the real-time housing temperature is greater than the target temperature corresponding to the current charging scenario, the preset charging current value is decreased according to a preset step size, and the step of performing a charging operation according to a preset charging current value is performed.

In a step of S70, if the real-time housing temperature is less than the target temperature corresponding to the current charging scenario, the preset charging current value is increased according to a preset step size, and the step of performing a charging operation according to a preset charging current value is performed.

In a step of S80, if the real-time housing temperature is equal to the target temperature corresponding to the current charging scenario, the current preset charging current value is determined as the balance charging current corresponding to the current charging scenario.

The balance charging currents in different charging scenarios are respectively detected. After the charging control apparatus is set to a charging scenario, an arbitrary initial current value is set as a preset charging current value and the charging control apparatus operates for a preset charging time. After the preset charging time, the charging operation is completed. At this moment, a real-time housing temperature is acquired. If the real-time housing temperature is greater than a target temperature corresponding to the charging scenario, it is determined that the heat generation of the charging control apparatus is currently greater than the heat dissipation of the charging control apparatus, and the heat generation of the battery needs to be reduced. Therefore, the preset charging current value is decreased according to a preset step size. The preset step size may be set based on actual application scenarios. In this embodiment, the preset step size is 500 mA. If the real-time housing temperature is less than the target temperature corresponding to the charging scenario, it is determined that the heat generation of the current charging control apparatus is less than the heat dissipation of the current charging control apparatus, and the charging current value is allowed to be increased to increase the charging efficiency of the battery. Therefore, the preset charging current value is increased according to a preset step size. If the real-time housing temperature is equal to the target temperature corresponding to the charging scenario, it is determined that a balance is currently achieved between the heat generation and heat dissipation of the charging control apparatus, and the current charging current value is a balance charging current corresponding to the current charging scenario.

According to this embodiment, the balance charging current can be accurately calculated.

In a third embodiment based on the charging control method according to the first embodiment of the present disclosure, S30 includes the following steps.

In a step of S31, it is determined whether the housing temperature is greater than the adjustment trigger temperature.

In a step of S32, the actual charging current is adjusted to a maximum charging current if the housing temperature is less than or equal to the adjustment trigger temperature.

The adjustment trigger temperature is used for indicating the temperature that triggers the adjustment of the actual charging current. When the housing temperature is less than or equal to the adjustment trigger temperature, it is determined that the operation intensity of the current charging control apparatus is low, and the battery can be fully charged. Therefore, in this case, the actual charging current is adjusted to the maximum charging current. The specific value of the maximum charging current is determined by a specification of the battery.

In a step of S33, an adjustment increment corresponding to the charging scenario is determined if the housing temperature is greater than the adjustment trigger temperature.

In a step of S34, the actual charging current is calculated according to the adjustment increment, the temperature difference, the housing temperature, the adjustment trigger temperature, and the maximum charging current.

When the housing temperature is greater than the adjustment trigger temperature, it is determined that the operation intensity of the current charging control apparatus is high, and the temperature of the battery needs to be lowered to strike a balance between heat generation and heat dissipation. In this case, the charging current is adjusted. In some embodiments, the actual charging current is calculated according to the following formula 1:

$$I_A = I_{max} - \Delta T \times 10 \times (T_{skin} - T_s)^2 - \Delta T \times K \times (T_{skin} - T_s)$$

where $I_A$ is the actual charging current, $I_{max}$ is the maximum charging current, $\Delta T$ is the temperature difference, $T_{skin}$ is the housing temperature, $T_s$ is the adjustment trigger temperature, and K is the adjustment increment.

The above formula may be regarded as a quadratic function with downward concavity. A larger temperature difference $\Delta T$, i.e., a higher operation intensity of the charging control apparatus, indicates a higher slope of the curve of the quadratic function, in other words, the higher the temperature near the target temperature, the smaller the actual charging current. As such, the charging current can be reduced faster to control the temperature to be below the target temperature.

The adjustment increment is used for indicating the adjustment amplitude of the actual charging current. In some embodiments, determining an adjustment increment corresponding to the charging scenario includes:

acquiring a balance charging current in the charging control parameter and a target temperature; and
calculating the adjustment increment according to the following formula 2:

$$I_t = I_{max} - \Delta T \times 10 \times (T_t - T_s)^2 - \Delta T \times K \times (T_t - T_s)$$

where It is the balance charging current, $\Delta T$ is the temperature difference, $T_t$ is the target temperature, $T_s$ is the adjustment trigger temperature, and K is the adjustment increment.

Since the above formula constructs an ideal actual charging current at the target temperature, i.e., the balance charging current, the most appropriate adjustment increment can be calculated by the above formula, and thus an optimal actual charging current can be calculated based on the adjustment increment.

A method of calculating the actual charging current is described below based on specific parameters.

For example, the battery temperature is 35°C, the housing temperature is 37°C, the temperature difference is 2°C, the actual charging scenario is determined to be the standby scenario, the acquired balance charging current corresponding to the standby scenario is $I_t$=6000 mA, the target temperature is $T_t$=40°C, the adjustment trigger temperature is $T_s$=32°C, and the maximum charging current of the battery is $I_{max}$=12000 mA. In this case, the corresponding parameters are substituted into formula 2 to obtain an adjustment increment K=295, and then the corresponding parameters are substituted into formula 1 to obtain an actual charging current $I_A$=10050 mA.

For example, the battery temperature is 34°C, the housing temperature is 39°C, the temperature difference is 5°C, the actual charging scenario is determined to be the moderate-use scenario, the acquired balance charging current corresponding to the standby scenario is $I_t$=2000 mA, the target temperature is $T_t$=40°C, the adjustment trigger temperature is $T_s$=37°C, and the maximum charging current of the battery is $I_{max}$=12000 mA. In this case, the corresponding parameters are substituted into formula 2 to obtain an adjustment increment K=637, and then the corresponding parameters are substituted into formula 1 to obtain an actual charging current $I_A$=5430 mA.

It is to be noted that in the standby scenario, since the difference between the housing temperature and the battery temperature is small, there may be a case where the housing temperature is lower than the battery temperature, resulting in a negative temperature difference, and the calculated actual charging current is greater than the maximum charging current. To avoid this case, in the standby scenario, the temperature difference may be fixed to the first threshold, i.e., the temperature difference may be fixed to 2 and substituted into formula 1 to calculate the actual charging current.

It is to be noted that in practical applications, to ensure that the battery is in a normal state, it is determined whether the battery temperature is greater than a preset safe temperature. If the battery temperature is greater than the preset safe temperature, the larger one of the battery temperature and the housing temperature is used as $T_{skin}$ in the above formula to calculate the actual charging current, so as to reduce the value of the actual charging current and speed up the cooling of the battery.

It is to be noted that to ensure a basic charging efficiency of the battery, a minimum charging current may be set, and when the calculated actual charging current is less than the minimum charging current, the minimum charging current may be used as the actual charging current. The specific value of the minimum charging current may be determined based on a specification of the battery and is, for example, 500 mA.

According to this embodiment, the actual charging current can be accurately calculated.

It is to be noted that for the sake of simplicity of description, the above method embodiments are all expressed as a series of operation combinations, but those having ordinary skills in the art should understand that the present disclosure is not limited by the described order of operations, and some steps may be performed in other orders or simultaneously according to the present disclosure. In addition, those having ordinary skills in the art should also understand that the embodiments described in the specification are all example embodiments, and the operations and modules involved may not be necessary for the present disclosure.

From the above detailed description of the embodiments, those having ordinary skills in the art can clearly understand that the methods in the above embodiments can be implemented by software and a necessary general-purpose hardware platform, and of course can also be implemented by hardware, but in many cases, the former is a better implementation. Based on such an understanding, the technical schemes of the present disclosure essentially or the part contributing to conventional technologies may be embodied in the form of a software product. The computer software product is stored in a storage medium (such as a ROM/RAM, a magnetic disk, an optical disc, etc.), and includes several instructions for instructing a terminal device (which may be a mobile phone, a computer, a server, a network device, or the like) to execute the methods described in the embodiments of the present disclosure.

The present disclosure further provides a charging control apparatus for implementing the charging control method described above. The charging control apparatus includes:

a first acquisition module, configured for acquiring a battery temperature and a housing temperature, and calculating a temperature difference between the battery temperature and the housing temperature;

a first determining module, configured for identifying an actual charging scenario corresponding to the temperature difference, and determining a charging control parameter corresponding to the actual charging scenario; and

a first adjustment module, configured for adjusting an actual charging current based on the charging control parameter.

The housing temperature is affected by the battery temperature, chip temperature, and camera temperature. Therefore, by acquiring the difference between the battery temperature and the housing temperature, the charging control apparatus can determine the heat generation efficiency of a chip, camera, and other components, which reflects the usage status of the chip, camera, and other components. Therefore, the actual charging scenario of the terminal device can be accurately determined according to the temperature difference, such that the charging current can be adaptively adjusted based on the actual scenario to ensure charging efficiency.

It is to be noted that the first acquisition module in this embodiment may be configured for executing the above step S10 in the embodiments of the present disclosure, the first determining module in this embodiment may be configured for executing the above step S20 in the embodiments of the present disclosure, and the first adjustment module in this embodiment may be configured for executing the above step S30 in the embodiments of the present disclosure.

In some embodiments, the first determining module includes:

a first acquisition unit, configured for acquiring a plurality of preset scenarios;

a first determining unit, configured for determining a target scenario corresponding to the temperature difference among the plurality of preset scenarios; and

a first execution unit, configured for determining the target scenario as the actual charging scenario.

In some embodiments, the plurality of preset scenarios includes a standby scenario, a light-use scenario, a moderate-use scenario, and a heavy-use scenario, and the first determining unit includes:

a first acquisition sub-unit, configured for acquiring a difference range corresponding to each of the plurality of preset scenarios, where a difference range corresponding to the standby scenario is less than or equal to a first threshold, a difference range corresponding to the light-use scenario is greater than the first threshold and less than or equal to a second threshold, a difference range corresponding to the moderate-use scenario is greater than the second threshold and less than or equal to a third threshold, and a difference range corresponding to the heavy-use scenario is greater than the third threshold; and

a first execution sub-unit, configured for determining the preset scenario corresponding to the difference range to which the temperature difference belongs as the target scenario.

In some embodiments, the charging control parameter includes an adjustment trigger temperature and a balance charging current, and the plurality of preset scenarios includes a standby scenario, a light-use scenario, a moderate-use scenario, and a heavy-use scenario;

the adjustment trigger temperatures corresponding to the standby scenario, the light-use scenario, the moderate-use scenario, and the heavy-use scenario are in ascending order; and
the balance charging currents corresponding to the standby scenario, the light-use scenario, the moderate-use scenario, and the heavy-use scenario are in descending order.

In some embodiments, the charging control parameter includes an adjustment trigger temperature; and the first adjustment module includes:

a first judgment unit, configured for determining whether the housing temperature is greater than the adjustment trigger temperature; and
a second execution unit, configured for adjusting the actual charging current to a maximum charging current if the housing temperature is less than or equal to the adjustment trigger temperature.

In some embodiments, the first adjustment module includes:

a second determining unit, configured for determining an adjustment increment corresponding to the charging scenario if the housing temperature is greater than the adjustment trigger temperature; and
a first calculation unit, configured for calculating the actual charging current according to the adjustment increment, the temperature difference, the housing temperature, the adjustment trigger temperature, and the maximum charging current.

In some embodiments, the first calculation unit includes:
a first calculation sub-unit, configured for calculating the actual charging current according to the following formula:

$$I_A = I_{max} - \Delta T \times 10 \times (T_{skin} - T_s)^2 - \Delta T \times K \times (T_{skin} - T_s)$$

where $I_A$ is the actual charging current, $I_{max}$ is the maximum charging current, $\Delta T$ is the temperature difference, $T_{skin}$ is the housing temperature, $T_s$ is the adjustment trigger temperature, and K is the adjustment increment.

In some embodiments, the second determining unit includes:

a second acquisition sub-unit, configured for acquiring a balance charging current in the charging control parameter and a target temperature; and
a second calculation sub-unit, configured for calculating the adjustment increment according to the following formula:

$$I_t = I_{max} - \Delta T \times 10 \times (T_t - T_s)^2 - \Delta T \times K \times (T_t - T_s)$$

where It is the balance charging current, $\Delta T$ is the temperature difference, $T_t$ is the target temperature, $T_s$ is the adjustment trigger temperature, and K is the adjustment increment.

In some embodiments, the apparatus further includes:

a first execution module, configured for performing a charging operation according to a preset charging current value for each of the plurality of charging scenarios;
a second acquisition module, configured for acquiring a real-time housing temperature after the charging operation is completed;
a second execution module, configured for: decreasing the preset charging current value according to a preset step size if the real-time housing temperature is greater than the target temperature corresponding to the current charging scenario, and performing the step of performing a charging operation according to a preset charging current value;
a third execution module, configured for: increasing the preset charging current value according to a preset step size if the real-time housing temperature is less than the target temperature corresponding to the current charging scenario, and performing the step of performing a charging operation according to a preset charging current value; and
a fourth execution module, configured for: determining the current preset charging current value as the balance charging current corresponding to the current charging scenario if the real-time housing temperature is equal to the target temperature corresponding to the current charging scenario.

It is to be noted that examples and application scenarios of the above modules are the same as those of the corresponding operations, but are not limited to the content disclosed in the above embodiments. It is to be noted that the above modules may be implemented by software or hardware as a part of the apparatus. The hardware environment includes a network environment.

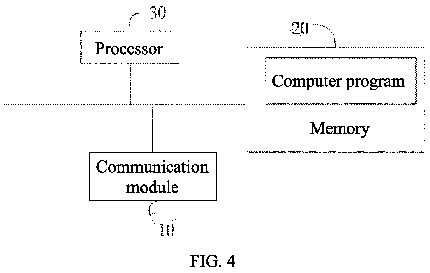

Referring to FIG. 4, the electronic device may include components such as a communication module 10, a memory 20, and a processor 30 in terms of hardware structure. In the electronic device, the processor 30 is respectively connected to the memory 20 and the communication module 10, the memory 20 has a computer program stored thereon, and the computer program, when executed by the processor 30, causes the processor 30 to execute the operations of the above method embodiments.

The communication module 10 may be connected to an external communication device through a network. The communication module 10 may receive a request from the external communication device, and may also send a request, an instruction, and information to the external communication device. The external communication device may be another electronic device, a server, or an Internet of Things device, such as a television, etc.

The memory 20 may be configured for storing a software program and various data. The memory 20 may mainly include a program storage area and a data storage area. The program storage area may store an operating system, an application required by at least one function (e.g., acquiring the battery temperature and the housing temperature), etc. The data storage area may include a database. The data storage area may store data or information created according to the use of the system and the like. In addition, the memory 20 may include a high-speed random access memory, and may also include a non-volatile memory, such as at least one magnetic disk storage device, a flash memory device, or another volatile solid storage device.

The processor 30 is a control center of the electronic device, and is connected to various parts of the electronic device through various interfaces and lines. By running or executing a software program and/or module stored in the memory 20 and invoking data stored in the memory 20, the processor 30 performs various functions of the electronic device and processes data. The processor 30 may include one or more processing units. In some embodiments, the processor 30 may integrate an application processor and a modem processor. The application processor mainly processes operations related to the operating system, user interfaces, application programs, and the like. The modem processor mainly processes wireless communication. It may be understood that the modem processor may not be integrated into the processor 30.

The electronic device may further include a circuit control module not shown in FIG. 4. The circuit control module is configured for connecting to a power supply to ensure normal operation of other components. Those having ordinary skills in the art may understand that the structure of the electronic device shown in FIG. 4 does not constitute a limitation to the electronic device, and the smart cockpit may include more or fewer components than those shown in the figure, or some components may be combined, or a different component arrangement may be used.

The present disclosure further provides a computer-readable storage medium, having a computer program stored thereon. The computer-readable storage medium may be the memory 20 in the electronic device of FIG. 4, or may be at least one of a ROM/RAM, a magnetic disk, and an optical disk. The computer-readable storage medium may contain several instructions for causing a terminal device (which may be a television, an automobile, a mobile phone, a computer, a server, a terminal device, a network device, etc.) having a processor to execute the methods described in the embodiments of the present disclosure.

The present disclosure provides a charging control method, an electronic device, and a readable storage medium. The charging control method includes: acquiring a battery temperature and a housing temperature, and calculating a temperature difference between the battery temperature and the housing temperature; identifying an actual charging scenario corresponding to the temperature difference, and determining a charging control parameter corresponding to the actual charging scenario; and adjusting an actual charging current based on the charging control parameter. The housing temperature is affected by the battery temperature, chip temperature, and camera temperature. Therefore, through the acquisition of the difference between the battery temperature and the housing temperature, the heat generation efficiency of a chip, camera, and other components can be determined, which reflects the usage status of the chip, camera, and other components. Therefore, the actual charging scenario of the terminal device can be accurately determined according to the temperature difference, such that the charging current can be adaptively adjusted based on the actual scenario to ensure charging efficiency.

In the present disclosure, the terms "first," "second," "third," "fourth," and "fifth" are used for descriptive purposes, and are not intended to indicate or imply relative importance. For those of ordinary skill in the art, the specific meanings of the above terms in the present disclosure can be understood according to specific circumstances.

In the description of the specification, the description with reference to the terms "an embodiment," "some embodiments," "example," "specific example," or "some example" and so on means that specific features, structures, materials or characteristics described in connection with the embodiment or example are embraced in at least one embodiment or example of the present disclosure. In the specification, the illustrative expression of the above terms is not necessarily referring to the same embodiment or example. Moreover, the described specific features, structures, materials or characteristics may be combined in any suitable manners in one or more embodiments. In addition, where there are no contradictions, the various embodiments or examples described in this specification and features of various embodiments or examples can be combined by those having ordinary skills in the art.

Although the embodiments of the present disclosure have been illustrated and described above, the protection scope of the present disclosure is not limited thereto. It is to be understood that the above embodiments are exemplary and not to be construed as limiting the present disclosure, and that variations, modifications, and replacements can be made by those skilled in the art without departing from the scope of the present disclosure, and such variations, modifications, and replacements shall fall within the protection scope of the present disclosure. Therefore, the protection scope of the present disclosure shall be subject to the protection scope of the claims.

**Claims**

**1.** A charging control method, comprising:

acquiring a battery temperature and a housing temperature, and calculating a temperature difference between the battery temperature and the housing temperature;

identifying an actual charging scenario corresponding to the temperature difference, and determining a charging control parameter corresponding to the actual charging scenario; and

adjusting an actual charging current based on the charging control parameter.

2. The charging control method of claim 1, wherein identifying an actual charging scenario corresponding to the temperature difference, and determining a charging control parameter corresponding to the actual charging scenario comprises:

acquiring a plurality of preset scenarios;

determining a target scenario corresponding to the temperature difference among the plurality of preset scenarios; and

determining the target scenario as the actual charging scenario.

3. The charging control method of claim 2, wherein the plurality of preset scenarios comprises a standby scenario, a light-use scenario, a moderate-use scenario, and a heavy-use scenario, and determining a target scenario corresponding to the temperature difference among the plurality of preset scenarios comprises:

acquiring a difference range corresponding to each of the plurality of preset scenarios, wherein a difference range corresponding to the standby scenario is less than or equal to a first threshold, a difference range corresponding to the light-use scenario is greater than the first threshold and less than or equal to a second threshold, a difference range corresponding to the moderate-use scenario is greater than the second threshold and less than or equal to a third threshold, and a difference range corresponding to the heavy-use scenario is greater than the third threshold; and

determining the preset scenario corresponding to the difference range to which the temperature difference belongs as the target scenario.

4. The charging control method of claim 2, wherein the charging control parameter comprises an adjustment trigger temperature and a balance charging current, and the plurality of preset scenarios comprises a standby scenario, a light-use scenario, a moderate-use scenario, and a heavy-use scenario;

the adjustment trigger temperatures corresponding to the standby scenario, the light-use scenario, the moderate-use scenario, and the heavy-use scenario are in ascending order; and

the balance charging currents corresponding to the standby scenario, the light-use scenario, the moderate-use scenario, and the heavy-use scenario are in descending order.

5. The charging control method of claim 1, wherein the charging control parameter comprises an adjustment trigger temperature; and adjusting an actual charging current based on the charging control parameter comprises:

determining whether the housing temperature is greater than the adjustment trigger temperature; and

adjusting the actual charging current to a maximum charging current in response to the housing temperature being less than or equal to the adjustment trigger temperature.

6. The charging control method of claim 5, wherein after determining whether the housing temperature is greater than the adjustment trigger temperature, the method further comprises:

determining an adjustment increment corresponding to the charging scenario in response to the housing temperature being greater than the adjustment trigger temperature; and

calculating the actual charging current according to the adjustment increment, the temperature difference, the housing temperature, the adjustment trigger temperature, and the maximum charging current.

7. The charging control method of claim 6, wherein calculating the actual charging current according to the adjustment increment, the temperature difference, the housing temperature, the adjustment trigger temperature, and the maximum charging current comprises:

calculating the actual charging current according to the following formula:

$$I_A = I_{max} - \Delta T \times 10 \times (T_{skin} - T_s)^2 - \Delta T \times K \times (T_{skin} - T_s)$$

wherein $I_A$ is the actual charging current, $I_{max}$ is the maximum charging current, $\Delta T$ is the temperature difference, $T_{skin}$ is the housing temperature, $T_s$ is the adjustment trigger temperature, and K is the adjustment increment.

8.  The charging control method of claim 6, wherein determining an adjustment increment corresponding to the charging scenario comprises:

    acquiring a balance charging current in the charging control parameter and a target temperature; and calculating the adjustment increment according to the following formula:

$$I_t = I_{max} - \Delta T \times 10 \times (T_t - T_s)^2 - \Delta T \times K \times (T_t - T_s)$$

    wherein It is the balance charging current, $\Delta T$ is the temperature difference, $T_t$ is the target temperature, $T_s$ is the adjustment trigger temperature, and K is the adjustment increment.

9.  The charging control method of claim 8, wherein the method further comprises:

    performing a charging operation according to a preset charging current value for each of the plurality of charging scenarios;
    acquiring a real-time housing temperature after the charging operation is completed;
    in response to the real-time housing temperature being greater than the target temperature corresponding to the charging scenario, decreasing the preset charging current value according to a preset step size, and performing the operation of performing a charging operation according to a preset charging current value;
    in response to the real-time housing temperature being less than the target temperature corresponding to the current charging scenario, increasing the preset charging current value according to a preset step size, and performing the operation of performing a charging operation according to a preset charging current value; and
    in response to the real-time housing temperature being equal to the target temperature corresponding to the current charging scenario, determining the current preset charging current value as the balance charging current corresponding to the current charging scenario.

10. An electronic device, comprising a memory, a processor, and a computer program stored in the memory and executable by the processor, wherein the computer program, when executed by a processor, causes the processor to perform the charging control method of any one of claims 1 to 9.

11. A computer-readable storage medium, having a computer program stored thereon, wherein the computer program, when executed by a processor, causes the processor to perform the charging control method of any one of claims 1 to 9.

Acquire a battery temperature and a housing temperature, and calculate a temperature difference between the battery temperature and the housing temperature

S10

Identify an actual charging scenario corresponding to the temperature difference, and determine a charging control parameter corresponding to the actual charging scenario

S20

Adjust an actual charging current based on the charging control parameter

S30

FIG. 1

Start

Calculate a first threshold for distinguishing a standby scenario from a non-standby scenario

Set an adjustment trigger temperature and a target temperature according to a charging scenario

Acquire a maximum charging current, a maximum voltage, a battery temperature, and a housing temperature

Calculate a temperature difference ΔT

| ΔT≤2 Standby scenario ΔT=2 Calculate an actual charging current | 2<ΔT≤4 Light-use scenario Calculate an actual charging current | 4<ΔT≤6 Moderate-use scenario Calculate an actual charging current | ΔT>6 Heavy-use scenario Calculate an actual charging current |

SOC=100?

End

FIG. 2

Start

Perform charging according to a preset charging current value for a preset charging time

| $T_{skin}>T_t$ Preset charging current value − 500 | $T_{skin}=T_t$ The preset charging current value is a balance charging current | $T_{skin}<T_t$ Preset charging current value + 500 |

End

FIG. 3

FIG. 4

## INTERNATIONAL SEARCH REPORT

| International application No. |
|---|
| **PCT/CN2023/136481** |

| A. | CLASSIFICATION OF SUBJECT MATTER |
|---|---|

H02J7/00(2006.01)i

According to International Patent Classification (IPC) or to both national classification and IPC

| B. | FIELDS SEARCHED |
|---|---|

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

VEN, CNTXT, CNABS, WOTXT, EPTXT, USTXT, CNKI, IEEE: 充电, 电池, 温度, 壳体, 差值, 场景, 调节, 电流, 触发, control, charging, temperature, battery, value, difference, current, housing

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110707772 A (GUANGDONG OPPO MOBILE TELECOMMUNICATIONS CORP., LTD.) 17 January 2020 (2020-01-17)<br>description, paragraphs [0031]-[0161], and figures 1-6 | 1-5, 10-11 |
| Y | CN 109634347 A (HUIZHOU TCL MOBILE COMMUNICATION CO., LTD.) 16 April 2019 (2019-04-16)<br>description, paragraphs [0015]-[0055], and figures 1-5 | 1-5, 10-11 |
| A | CN 111290553 A (GUANGDONG OPPO MOBILE TELECOMMUNICATIONS CORP., LTD.) 16 June 2020 (2020-06-16)<br>entire document | 1-11 |
| A | CN 114726013 A (BEIJING XIAOMI MOBILE SOFTWARE CO., LTD.) 08 July 2022 (2022-07-08)<br>entire document | 1-11 |
| A | WO 2017197692 A1 (ZTE CORP.) 23 November 2017 (2017-11-23)<br>entire document | 1-11 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 February 2024** | **08 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/136481**

| Patent document cited in search report | | | Publication date (day/month/year) | Patent family member(s) | | | Publication date (day/month/year) |
|---|---|---|---|---|---|---|---|
| CN | 110707772 | A | 17 January 2020 | WO | 2021068769 | A1 | 15 April 2021 |
| CN | 109634347 | A | 16 April 2019 | CN | 109634347 | B | 08 January 2021 |
| CN | 111290553 | A | 16 June 2020 | CN | 111290553 | B | 07 January 2022 |
| CN | 114726013 | A | 08 July 2022 | None | | | |
| WO | 2017197692 | A1 | 23 November 2017 | EP | 3461247 | A1 | 27 March 2019 |
| | | | | EP | 3461247 | A4 | 22 January 2020 |
| | | | | CN | 107396591 | A | 24 November 2017 |
| | | | | CN | 107396591 | B | 07 August 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211701257